# EUROPÄISCHE PATENTSCHRIFT

(11) **EP 2 566 300 B1**
(45) Veröffentlichungstag und Bekanntmachung des Hinweises auf die Patenterteilung: **27.06.2018**
(21) Anmeldenummer: 12005580.1
(22) Anmeldetag: 01.08.2012
(51) Int. Cl.: H05B 33/08, H05B 37/02

(54) **LED-Modul-System**
LED Module sytem
System avec un module DEL

(30) Priorität: 31.08.2011 DE 102011111970
(43) Veröffentlichungstag der Anmeldung: 06.03.2013
(73) Patentinhaber: ABB AG, 68309 Mannheim (DE)
(72) Erfinder: Szkudlarek, Thomas, 45665 Recklinghausen (DE); Dehlen, Sascha, 58540 Meinerzhagen (DE); Goldyn, Dirk, 58454 Witten (DE); Rümenapf, Peter, 44149 Dortmund (DE)

(56) Entgegenhaltungen:
- EP-A2- 2 293 653
- US-A1- 2007 109 763
- US-A1- 2007 228 999
- US-A1- 2008 092 800

## Beschreibung

Die Erfindung betrifft ein LED-Modul-System mit einem LED-Modul mit einer integrierten LED-Baugruppe, welche mittels einer integrierten Ansteuervorrichtung in Abhängigkeit der Signale eines integrierten Dämmerungssensors ansteuerbar ist. Das vorgeschlagene LED-Modul eignet sich beispielsweise zur Montage an einer Außenwand eines Gebäudes, um derart beispielsweise den Eingangsbereich inklusive Eingangstür zu beleuchten.

Aus der US 2007/228999 A1 ist eine Energiesparvorrichtung für eine LED-Lampe bekannt, die an einer vorhandenen Halterung für eine Leuchtstofflampe angebracht ist. Die LED-Lampe enthält Mittel zum Steuern der Abgabe der elektrischen Energie von einer Stromquelle zu den LEDs, wobei die Verwendung von elektrischer Energie während der Nichtbenutzung automatisch reduziert oder eliminiert werden kann.

Aus der DE 10 2009 031 404 A1 ist ein Leuchtelement mit mindestens einer Leuchtdiode bekannt, mit einer Sensorik zur Signalauswertung der mindestens einen Leuchtdiode (z. B. als Sensorik zur Helligkeitsmessung eingerichtet) und mit einer Steuerung, die abhängig von der Signalauswertung die mindestens eine Leuchtdiode ansteuert, wobei die Sensorik und die Steuerung als ein Bauelement ausgeführt sind. Dabei können beispielsweise mehrere Leuchtdioden um das Bauelement angeordnet sein.

Aus der DE 10 2007 044 567 A1 ist eine Beleuchtungseinrichtung mit mehreren steuerbaren Leuchtdioden bekannt, die Licht unterschiedlicher Wellenlänge abgeben. In einem Leuchtmodul sind eine Lichtquelle, die mehrere auf einem Modulträger verbunden. Die Helligkeit und die Farbart der vom Leuchtmodul abgegebenen Lichtmischung sind einstellbar bzw. kalibrierbar.

Aus der DE 10 2007 033 195 A1 ist eine sensorgesteuerte Beleuchtungsvorrichtung mit einer zum Aufnehmen eines Leuchtmittels sowie einer zum Aktivieren und/oder Deaktivieren des Leuchtmittels als Reaktion auf ein Umgebungslichtsignal, insbesondere eine Helligkeitsänderung, ausgebildeten, mit einer Sensoreinheit verbundenen Sensorelektronik ausgebildeten Sockeleinheit bekannt. Die Sockeleinheit kann bodenseitig mit einem Schraubsockel zum Befestigen der sensorgesteuerten Beleuchtungsvorrichtung in einer Leuchtmittelfassung versehen sein.

Aus der EP 2 107 295 A2 ist eine Leuchtenvorrichtung mit einem mindestens eine LED als Leuchtmittel aufweisenden Leuchtmittelträger und einer der mindestens einen LED zugeordneten, zum gesteuerten Aktivieren der LED ausgebildeten Steuerelektronik bekannt. Ein mit der Steuerelektronik zusammenwirkender Bewegungs- und/oder Helligkeitssensor ist zum bewegungs- bzw. helligkeitsabhängigen Aktivieren der mindestens einen LED ausgebildet.

Der Erfindung liegt die Aufgabe zugrunde, ein LED-Modul-System mit einem LED-Modul in optimierter Ausführungsform anzugeben.

Diese Aufgabe wird erfindungsgemäß gelöst durch ein LED-Modul-System gemäß Anspruch 1. Dabei sind eine unterschiedliche LED-Baugruppe mit weißen LEDs und eine unterschiedliche LED-Baugruppe mit RGB-LEDs vorgesehen, wobei diese separaten LED-Baugruppen unter Einsatz separater Dimmer in Abhängigkeit separater Ansteuersignale der Ansteuervorrichtung unabhängig voneinander in gewünschter Helligkeit und/oder Farbe ansteuerbar sind. Vorteilhaft kann der Anwender derart eine individuell gewünschte Farblicht-Beimischung wählen und einstellen.

In die Ausgestaltung des LED-Moduls ist ein zweiter Schalteingang integriert, wobei ein externer EIN/AUS-Schalter an diesen zweiten Schalteingang angeschlossen ist. Auf diese Weise kann das LED-Modul einen durch das Signal dieses externen EIN/AUS-Schalters aktivierbaren "Signalisierungs-Modus" als weiteren Modus annehmen, bei welchem die LEDs mit einer vorgegebenen Frequenz zwischen unterschiedlichen Helligkeiten und/oder Farben wechseln.

Die mit der Erfindung erzielbaren Vorteile bestehen insbesondere darin, dass das LED-Modul während der Dämmerung und während der Nacht automatisch stets mit verminderter Helligkeit eingeschaltet ist, während die maximale Helligkeit vom Anwender entweder gezielt per Schaltvorgang aktivierbar ist oder automatisch bei Detektion einer Person eingeschaltet wird. Insgesamt ist damit ein energieeffizienter Betrieb des LED-Moduls sichergestellt. Infolge der Integration aller wesentlichen Baukomponenten im LED-Modul wird eine einfache Montage ermöglicht.

Die Erfindung wird nachstehend an Hand der in der Zeichnung dargestellten Ausführungsbeispiele erläutert. Es zeigen:
Fig. 1 ein Beispiel der Schaltungskonfiguration eines LED-Modul-Systems mit einem LED-Modul,
Fig. 2 ein Beispiel zur räumlichen Ausbildung eines LED-Moduls,
Fig. 3 ein Beispiel eines LED-Modul-Systems mit einem LED-Modul mit zusätzlicher Ansteuermöglichkeit von RGB-LEDs,
Fig. 4 ein Ausführungsbeispiel eines LED-Modul-Systems mit einem LED-Modul mit einem zusätzlichen Schalteingang.

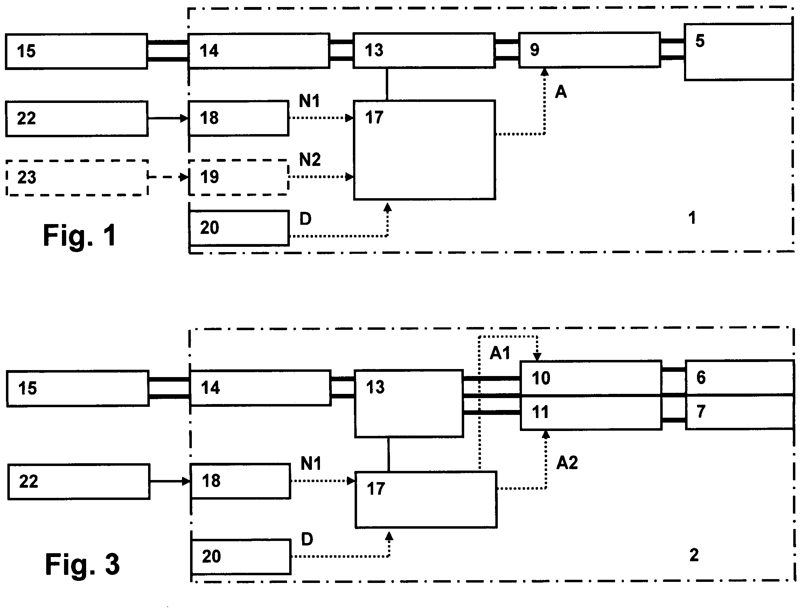

In Fig. 1 ist ein Beispiel der Schaltungskonfiguration eines LED-Modul-Systems mit einem LED-Modul dargestellt. Das gezeigte LED-Modul 1 weist eine LED-Gruppe 5 auf, welche beispielsweise aus weißen LEDs und/oder RGB-LEDs besteht. Diese LED-Baugruppe 5 wird über einen integrierten Dimmer 9 gespeist, welcher eingangsseitig an ein integriertes Netzteil 13 angeschlossen ist, welches über einen mit einem 230V-Netz verbundenen Netzanschluss 14 verfügt. Für die Ansteuerung des Dimmers 9 ist eine integrierte Ansteuerung 17 vorgesehen, welche eingangsseitig mit einem (ersten) integrierten Schalteingang 18 und einem integrierten Dämmerungssensor 20 verbunden ist und dementsprechend als Eingangssignale Signale N1 des Schalteingangs 18 und Signale D des Dämmerungssensors 20 empfängt sowie ausgangsseitig in Abhängigkeit dieser Eingangssignale N1, D ein Ansteuersignal A für den Dimmer 9 abgibt.

Das Signal D des integrierten Dämmerungssensors 20 wird in Abhängigkeit eines vom Anwender voreinstellbaren Helligkeitsniveaus bzw. eines entsprechenden Lichtwertes gebildet und weist einen logischen Wert "L" (Low) auf, wenn das eingestellte Helligkeitsniveau unterschritten ist und es weist einen logischen Wert "H" (High) auf, wenn das eingestellte Helligkeitsniveau überschritten ist.

Der (erste) Schalteingang 18 wird von einem externen EIN/AUS-Schalter oder externen Bewegungsmelder 22 beaufschlagt. Das Signal N1 des Schalteingangs 18 weist einen logischen Wert "L" (Low) auf, wenn sich der externe EIN/AUS-Schalter im Ausschalt-Zustand befindet oder wenn keine Bewegung mittels des externen Bewegungsmelders detektiert worden ist. Das Signal N1 des Schalteingangs 18 weist einen logischen Wert "H" (High) auf, wenn sich der externe EIN/AUS-Schalter im Einschalt-Zustand befindet oder wenn eine Bewegung mittels des Bewegungsmelders detektiert worden ist.

Das Ansteuersignal A der Ansteuervorrichtung 17 ist entsprechend den Eingangssignalen D und N1 unterschiedlich gestaltet und gibt dem Dimmer 9
a) eine Ansteuerung von 0% (0% Licht) vor, wenn sowohl D als auch N1 den logischen Wert "L" aufweisen, auch als "Ausschalt-Modus" bezeichnet,
b) eine Ansteuerung eines definierten Wertes zwischen 0% und 100% (durch den Dimmgrad eingestellte verminderte Helligkeit) vor, beispielsweise 20%, wenn D den logischen Wert "H" aufweist und N1 den logischen Wert "L" aufweist, auch als "Sensor-Modus" bezeichnet,
c) eine Ansteuerung von 100% vor (100% Licht, maximale Helligkeit), wenn N1 den logischen Wert "H" aufweist, auch als "Licht-Modus" bezeichnet.

Auf diese Art und Weise ergibt sich eine automatische Beleuchtung des vorgeschlagenen LED-Moduls während der Dämmerung und der Nacht mit verminderter Helligkeit, während die maximale Helligkeit lediglich dann eingeschaltet wird, wenn dies vom Anwender per Betätigung des externen Schalters gewünscht wird oder wenn die Bewegung einer Person mittels des externen Bewegungsmelders detektiert worden ist. Ansonsten ist das LED-Modul ausgeschaltet.

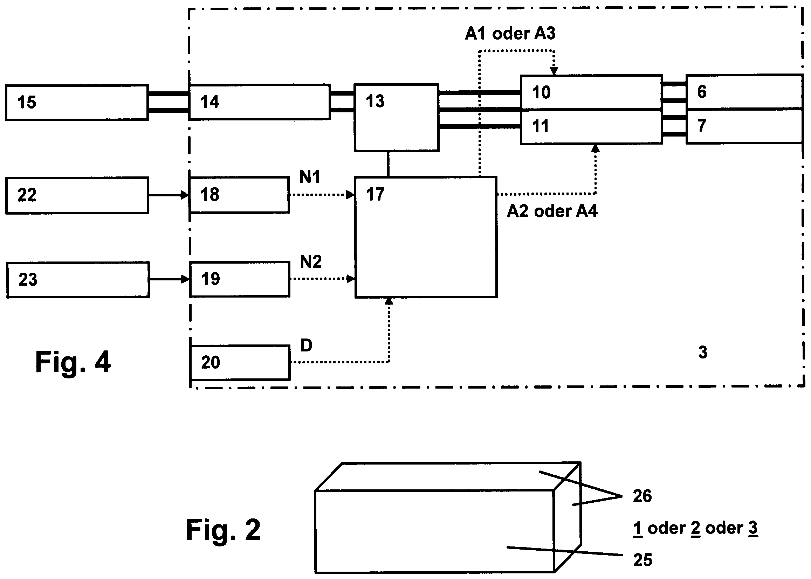

In Fig. 2 ist ein Beispiel zur räumlichen Ausbildung eines LED-Moduls dargestellt. Das gezeigte LED-Modul 1 oder 2 oder 3 ist in Form eines Quaders ausgebildet, mit einer Frontfläche 25 aus einem lichtdurchlässigen Material und Kantenflächen 26, die ebenfalls aus einem lichtdurchlässigen Material bestehen. Die nicht gezeigte Bodenplatte des LED-Moduls 1 oder 2 oder 3 wird z. B. an einer Wand montiert und trägt die elektrischen/elektronischen sowie die mechanischen Baukomponenten inklusive des Gehäuses mit Frontfläche 25 und Kantenflächen 26. An der Frontfläche 25 kann z. B. die Hausnummer eines Gebäudes in Form einer lichtundurchlässigen Beschichtung gekennzeichnet sein.

Beim vorstehend erwähnten, durch den Schalteingang 18 aktivierten "Licht-Modus" erfolgt ein diffuser Lichtaustritt mit möglichst geringer Blendwirkung durch die Frontfläche 25 und ein zusätzlicher, in der Leuchtwirkung zur Frontfläche annähernd gleicher Lichtaustritt an den Kantenflächen 26, wobei durch den Dimmer 9 100%-Licht (maximale Helligkeit) erzeugt/eingestellt wird.

Beim vorstehend erwähnten, durch den integrierten Dämmerungssensor 20 während der Dämmerung und der Nacht aktivierten "Sensor-Modus" erfolgen ein gedimmter Lichtaustritt durch die Frontfläche 25 und ein zusätzlicher, in der Leuchtwirkung zur Frontfläche annähernd gleicher gedimmter Lichtaustritt an den Kantenflächen 26, wobei durch den Dimmer 9 z. B. 20%-Licht (verminderte Helligkeit, mittels Dimmgrad vorgegeben) erzeugt/eingestellt wird.

In Fig. 3 ist ein Beispiel der Schaltungskonfiguration eines LED-Modul-Systems mit einem LED-Modul mit zusätzlicher Ansteuermöglichkeit von RGB-LEDs dargestellt. Die aus Netzteil 13, Netzanschluss 14, 230V-Netz 15, Ansteuervorrichtung 17, (erstem) Schalteingang 18, Dämmerungssensor 20 und EIN/AUS-Schalter 22 gebildete Schaltungskonfiguration des LED-Moduls 2 ist ausgebildet, wie dies vorstehend für das erste Ausführungsbeispiel Fig. 1 beschrieben ist. Die LED-Baugruppe 5 wird jedoch durch eine aus weißen LEDs gebildete LED-Baugruppe 6 und durch eine aus RGB-LEDs gebildete LED-Baugruppe 7 ersetzt, dementsprechend wird der Dimmer 9 durch einen ersten Dimmer 10 zur Speisung der (weißen) LED-Baugruppe 6 und einen zweiten Dimmer 11 zur Speisung der (RGB) LED-Baugruppe 7 ersetzt. Beide Dimmer 10, 11 sind an das Netzteil 13 angeschlossen und unabhängig voneinander betreibbar. Die Ansteuervorrichtung 17 kann unabhängig voneinander separate Ansteuersignale A1 an den ersten Dimmer 10 und Ansteuersignale A2 an den zweiten Dimmer 11 senden.

Durch die Aufteilung des Dimmers 9 in zwei separate und unabhängig voneinander einstellbare Dimmer 10 und 11 ist es nunmehr für den Anwender möglich, zusätzlich zum Weiß-Licht eine homogene, flächige "RGB-Beimischung" respektive Farblicht-Beimischung an der Frontfläche 25 und gegebenenfalls auch an den Kantenflächen 26 des LED-Moduls in gewünschter Art und Weise vorzunehmen, was insbesondere im Sensor-Modus erwünscht ist.

Die Ansteuersignale A1 und A2 der Ansteuervorrichtung 17 sind entsprechend den Eingangssignalen D und N1 unterschiedlich und völlig unabhängig voneinander gestaltet, und zwar wird
A) den beiden Dimmern 10, 11 eine Ansteuerung von 0% (0% Licht) vorgegeben, wenn sowohl D als auch N1 den logischen Wert "L" aufweisen, auch als "Ausschalt-Modus" bezeichnet,
B) wird dem Dimmer 10 eine Ansteuerung eines definierten (vom Anwender frei wählbaren) Wertes zwischen 0% und 100% (Dimmgrad) in Form des Ansteuersignals A1 vorgegeben, beispielsweise 20%, wenn D den logischen Wert "H" aufweist und N1 den logischen Wert "L" aufweist, auch als "Sensor-Modus" bezeichnet,
C) wird dem Dimmer 11 eine Ansteuerung eines definierten Wertes zwischen 0% und 100% in Form des Ansteuersignals A2 vorgegeben, beispielsweise 100%, wenn D den logischen Wert "H" aufweist und N1 den logischen Wert "L" aufweist, auch als "Sensor-Modus" bezeichnet,
D) wird dem Dimmer 10 eine Ansteuerung von 100% vor (100% Licht) in Form des Ansteuersignals A1 vorgegeben, wenn N1 den logischen Wert "H" aufweist, auch als "Licht-Modus" bezeichnet,
E) wird dem Dimmer 11 eine Ansteuerung von 0% vor (0% Licht) in Form des Ansteuersignals A2 vorgegeben, wenn N1 den logischen Wert "H" aufweist, auch als "Licht-Modus" bezeichnet.

Von Wichtigkeit ist es in diesem Zusammenhang, dass der Anwender des LED-Moduls selbst den in den jeweils unterschiedlichen Moden individuell gewünschten Dimmgrad der Dimmer 10 und 11 zwischen 0% und 100% (beispielsweise bei der Inbetriebnahme) einstellen kann. Insofern sind die vorstehenden prozentualen Werte lediglich beispielhaft zu verstehen.

In Fig. 4 ist ein Ausführungsbeispiel der Schaltungskonfiguration eines LED-Modul-Systems mit einem LED-Modul mit einem zusätzlichen Schalteingang dargestellt. Die aus (weißer) LED-Baugruppe 6, (RGB) LED-Baugruppe 7, erstem Dimmer 10, zweitem Dimmer 11, Netzteil 13, Netzanschluss 14, 230V-Netz 15, Ansteuervorrichtung 17, erstem Schalteingang 18, Dämmerungssensor 20 und EIN/AUS-Schalter 22 gebildete Schaltungskonfiguration des LED-Moduls 3 ist ausgebildet, wie dies vorstehend für das zweite Ausführungsbeispiel gemäß Fig. 3 beschrieben ist. Zusätzlich ist ein zweiter Schalteingang 19 vorgesehen, welcher von einem EIN/AUSSchalter 23 beaufschlagbar ist. Die Ansteuervorrichtung 17 kann Ansteuersignale A1 oder A3 an den ersten Dimmer 10 und/oder Ansteuersignale A2 oder A4 an den zweiten Dimmer 11 senden.

Der zweite Schalteingang 19 wird von einem EIN/AUS-Schalter 23 beaufschlagt. Das Signal N2 des Schalteingangs 19 weist einen logischen Wert "L" (Low) auf, wenn sich der EIN/AUS-Schalter 23 im Ausschalt-Zustand befindet. Das Signal N2 des Schalteingangs 19 weist einen logischen Wert "H" (High) auf, wenn sich der EIN/AUS-Schalter 23 im Einschalt-Zustand befindet. Das Einschalten (die Betätigung) des EIN/AUS-Schalter 23 erfolgt durch den Anwender, um bewusst einen "Signalisierungs-Modus" zu erzeugen bzw. zu starten.

Die Ansteuersignale A1 und A2 der Ansteuervorrichtung 17 können generiert werden, wie dies vorstehend unter A) - E) erläutert ist. Zusätzlich kann die Ansteuervorrichtung 17 im "Signalisierungs-Modus" bei Vorliegen eines Signals N2 mit dem logischen Wert "H" die Ansteuersignale A3 und A4 erzeugen, wodurch die LEDs des LED-Moduls 3 mit einer vorgegebenen Frequenz zwischen unterschiedlichen Helligkeiten und/oder Farben wechseln. Bei Montage des LED-Moduls an einer zur Straßenseite gerichteten Wand eines Gebäudes kann beispielsweise ein Notarztwagen mit Hilfe dieser Unterstützung in die Lage versetzt werden, ein aufzusuchendes Gebäude schneller ausfindig zu machen. Das Signal N2 mit dem logischen Wert "H" hat dabei Vorrang vor einem Signal N1 mit dem logischen Wert "H", d. h. die Ansteuersignale A3 und A4 werden unabhängig davon erzeugt, ob das Signal N2 den logischen Wert "L" oder "H" hat.

Beispielsweise wird bei Vorliegen eines Signals N2 mit dem logischen Wert "H" ein Ansteuersignal A4 erzeugt, durch welches die (RGB) LED-Baugruppe 7 mittels des zweiten Dimmers 11 derart angesteuert wird, dass sie mit roter Farbe permanent mit 100% Helligkeit aufleuchtet oder und mit vorgegebener Frequenz zwischen 0% und 100% Helligkeit aufleuchtet oder mit vorgegebener Frequenz zwischen verschiedenen Farben, z. B. zwischen roter Farbe und grüner Farbe wechselt. Des Weiteren wird ein Ansteuersignal A3 erzeugt, durch welches die (weiße) LED-Baugruppe 6 mittels des ersten Dimmers 10 derart angesteuert wird, das sie permanent mit 100% Helligkeit aufleuchtet oder und mit vorgegebener Frequenz zwischen 0% oder verminderter Helligkeit und 100% Helligkeit respektive maximaler Helligkeit aufleuchtet. Die beim Ausführungsbeispiel gemäß Fig. 3 gezeigte zusätzliche Schaltungskonfiguration mit zweitem Schalteingang 10 und daran angeschlossenem EIN/AUS-Schalter 23 kann auch beim Ausführungsbeispiel gemäß Fig. 1 implementiert werden, wie dies in gestrichelter Weise in Fig.1 gezeigt ist. Das Signal N2 des Schalteingangs 19 weist einen logischen Wert "L" (Low) auf, wenn sich der EIN/AUS-Schalter 23 im Ausschalt-Zustand befindet. Das Signal N2 des Schalteingangs 19 weist einen logischen Wert "H" (High) auf, wenn sich der EIN/AUS-Schalter 23 im Einschalt-Zustand befindet. Zu den gemäß a) - c) behandelten drei Moden "Ausschalt-Modus", "Sensor-Modus" und "Licht-Modus" kommt dann zusätzlich der weitere Modus "Signalisierungs-Modus" hinzu. Die Ansteuervorrichtung 17 erzeugt im "Signalisierungs-Modus" bei Vorliegen eines Signals N2 mit dem logischen Wert "H" ein Ansteuersignal A, mit welchem die LEDs des LED-Moduls 3 mit einer vorgegebenen Frequenz zwischen zwei unterschiedlichen Helligkeiten, z. B. zwischen einer verminderten Helligkeit und einer maximalen Helligkeit, wechseln. Das Signal N2 mit dem logischen Wert "H" hat dabei Vorrang vor einem Signal N1 mit dem logischen Wert "H".

### Bezugszeichenliste

- 1: LED-Modul
- 2: LED-Modul
- 3: LED-Modul
- 4: -
- 5: LED-Baugruppe (Weiß-Licht, gegebenenfalls mit Farblicht-Beimischung)
- 6: LED-Baugruppe, gebildet aus weißen LEDs (Weiß-Licht)
- 7: LED-Baugruppe, gebildet aus RGB-LEDs (für gewünschte Farblicht-Beimischung)
- 8: -
- 9: Dimmer
- 10: erster Dimmer
- 11: zweiter Dimmer
- 12: -
- 13: Netzteil
- 14: Netzanschluss
- 15: 230V-Netz
- 16: -
- 17: Ansteuervorrichtung
- 18: (erster) Schalteingang
- 19: zweiter Schalteingang
- 20: Dämmerungssensor
- 21: -
- 22: EIN/AUS-Schalter oder Bewegungsmelder
- 23: EIN/AUS-Schalter
- 24: -
- 25: Frontfläche des LED-Moduls 1, 2, 3
- 26: Kantenflächen des LED-Moduls 1, 2, 3
- A, A1, A2, A3, A4: unterschiedliche Ansteuersignale der Ansteuervorrichtung 17 zur Vorgabe eines "Ausschalt-Modus" oder "Sensor-Modus" oder "Licht-Modus" oder "Signalisierungs-Modus"
- D: Signal des Dämmerungssensors 20 ("L", wenn Helligkeitsniveau unterschritten, "H", wenn Helligkeitsniveau überschritten)
- N1: Signal des ersten Schalteingangs 18 ("L", wenn keine Bewegung detektiert oder Schalter 22 "AUS", "H", wenn Bewegung detektiert oder Schalter 22 "EIN")
- N2: Signal des zweiten Schalteingangs 19 ("L", wenn Schalter 23 "AUS", "H", wenn Schalter 23 "EIN")

## Patentansprüche

1. LED-Modul-System mit einem LED-Modul (1, 2, 3) mit mindestens einer integrierten LED-Baugruppe (5, 6, 7), welche an mindestens einen integrierten Dimmer (9, 10, 11) angeschlossen ist, welcher mittels einer integrierten Ansteuervorrichtung (17) in Abhängigkeit der Signale (D) eines integrierten Dämmerungssensors (20) und der Signale (N1) eines integrierten Schalteingangs (18) ansteuerbar ist, wobei ein externer EIN/AUS-Schalter oder Bewegungsmelder (22) an den Schalteingang (18) angeschlossen ist,
• wobei das LED-Modul (1, 2, 3) zumindest drei unterschiedliche Moden annehmen kann, nämlich einen "Ausschalt-Modus", einen "Sensor-Modus" und einen "Licht-Modus",
• wobei der "Licht-Modus" mit maximaler Helligkeit durch das Signal (N1) des externen EIN/AUS-Schalters oder Bewegungsmelder (22) aktivierbar ist,
• wobei der "Sensor-Modus" mit in vorgegebener Weise verminderter Helligkeit automatisch durch das Signal (D) des Dämmerungssensors (20) aktivierbar ist, **dadurch gekennzeichnet, dass**
• der integrierte Dimmer (9, 10, 11) eingangsseitig an ein integriertes Netzteil (13) angeschlossen ist, welches über einen mit einem 230V-Netz verbundenen Netzanschluss (14) verfügt,
• beim LED-Modul (3) ein zweiter Schalteingang (19) integriert ist, wobei ein externer EIN/AUS-Schalter (23) an diesen zweiten Schalteingang (18) angeschlossen ist und dass das LED-Modul (3) einen durch das Signal (N2) dieses externen EIN/AUS-Schalters (23) aktivierbaren "Signalisierungs-Modus" als weiteren Modus annehmen kann, bei welchem die LEDs mit einer vorgegebenen Frequenz zwischen unterschiedlichen Helligkeiten und/oder Farben wechseln,
• beim LED-Modul (2, 3) eine erste LED-Baugruppe (6) mit weißen LEDs und eine zweite LED-Baugruppe (7) mit RGB-LEDs vorgesehen sind, wobei diese separaten LED-Baugruppen (6, 7) unter Einsatz separater Dimmer (10, 11) in Abhängigkeit separater Ansteuersignale (A1, A2) der Ansteuervorrichtung (17) unabhängig voneinander in gewünschter Helligkeit und/oder Farbe ansteuerbar sind,
• wobei die Ansteuervorrichtung (17) unabhängig voneinander separate Ansteuersignale A1 an den ersten Dimmer (10) und Ansteuersignale (A2) an den zweiten Dimmer (11) senden kann.

## Claims

1. LED module system having an LED module (1, 2, 3) having at least one integrated LED assembly (5, 6, 7), which is connected to at least one integrated dimmer (9, 10, 11), which can be driven by means of an integrated drive apparatus (17) depending on the signals (D) of an integrated dusk sensor (20) and the signals (N1) of an integrated switching input (18), wherein an external ON/OFF switch or motion detector (22) is connected to the switching input (18),
• wherein the LED module (1, 2, 3) can assume at least three different modes, namely a "switch-off mode", a "sensor mode" and a "light mode",
• wherein the "light mode" can be activated with maximum brightness by the signal (N1) of the external ON/OFF switch or motion detector (22),
• wherein the "sensor mode" can be activated automatically with brightness reduced in a prescribed manner by the signal (D) of the dusk sensor (20),
**characterized in that**
• the input side of the integrated dimmer (9, 10, 11) is connected to an integrated power supply unit (13), which has a power supply connection (14) connected to a 230 V power supply,
• in the LED module (3), a second switching input (19) is integrated, wherein an external ON/OFF switch (23) is connected to said second switching input (18) and **in that** the LED module (3) can assume a "signalling mode" as a further mode, which can be activated by the signal (N2) of said external ON/OFF switch (23) and in which the LEDs alternate between different brightnesses and/or colours at a prescribed frequency,
• in the LED module (2, 3), a first LED assembly (6) is provided with white LEDs and a second LED assembly (7) is provided with RGB LEDs, wherein said separate LED assemblies (6, 7) can be driven in the desired brightness and/or colour independently of one another using separate dimmers (10, 11) depending on separate drive signals (Al, A2) of the drive apparatus (17),
• wherein the drive apparatus (17) can transmit separate drive signals (A1) to the first dimmer (10) and drive signals (A2) to the second dimmer (11) independently of one another.

## Revendications

1. Système de module à LED, comprenant un module à LED (1, 2, 3) comportant au moins un sous-ensemble à LED (5, 6, 7) intégré qui est raccordé à au moins un gradateur (9, 10, 11) intégré, lequel peut être commandé au moyen d'un dispositif de commande (17) intégré en fonction des signaux (D) d'un capteur crépusculaire (20) intégré et des signaux (N1) d'une entrée de commutation (18) intégrée, un commutateur Marche/Arrêt externe ou un détecteur de mouvement (22) étant raccordé à l'entrée de commutation (18),
* le module à LED (1, 2, 3) pouvant adopter au moins trois modes différents, à savoir un « mode déconnecté », un « mode détecteur » et un « mode éclairage »,
* le « mode éclairage » à la luminosité maximale pouvant être activé par le signal (N1) du commutateur Marche/Arrêt externe ou du détecteur de mouvement (22), * le « mode détecteur », avec une luminosité réduite d'une manière prédéfinie, pouvant être activé automatiquement par le signal (D) du capteur crépusculaire (20),
caractérisé en que
* le gradateur (9, 10, 11) intégré est raccordé du côté de l'entrée à un adaptateur secteur (13) intégré qui dispose d'une borne secteur (14) raccordée à un réseau de 230 V,
* une deuxième entrée de commutation (19) est intégrée au niveau du module à LED (3), un commutateur Marche/Arrêt (23) externe étant raccordé à cette deuxième entrée de commutation (18) et en ce que le module à LED (3) peut adopter un « mode de signalisation », activable par le signal (N2) de ce commutateur Marche/Arrêt (23) externe, en tant que mode supplémentaire avec lequel les LED changent entre différentes luminosités et/ou couleurs à une fréquence prédéfinie,
* un premier sous-ensemble de LED (6) comprenant les LED blanches et un deuxième sous-ensemble de LED (7) comprenant les LED RGB se trouvant au niveau du module à LED (2, 3), ces sous-ensembles de LED (6, 7) séparés pouvant être commandés indépendamment l'un de l'autre dans la luminosité et/ou la couleur souhaitée en utilisant des gradateurs (10, 11) séparés en fonction de signaux de commande (Al, A2) séparés du dispositif de commande (17),
* le dispositif de commande (17) pouvant envoyer indépendamment les uns des autres des signaux de commande (A1) séparés au premier gradateur (10) et des signaux de commande (A2) au deuxième gradateur (11).
